(19) Europäisches Patentamt
European Patent Office
Office européen des brevets

(11) EP 4 249 540 A1

(12) EUROPEAN PATENT APPLICATION
published in accordance with Art. 153(4) EPC

(43) Date of publication:
27.09.2023 Bulletin 2023/39

(21) Application number: 21894437.9

(22) Date of filing: 27.10.2021

(51) International Patent Classification (IPC):
*C08J 5/04* (2006.01) *B32B 27/04* (2006.01)
*B32B 27/38* (2006.01)

(52) Cooperative Patent Classification (CPC):
B32B 27/04; B32B 27/38; C08J 5/04

(86) International application number:
PCT/JP2021/039650

(87) International publication number:
WO 2022/107563 (27.05.2022 Gazette 2022/21)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 18.11.2020 JP 2020191462

(71) Applicant: Toray Industries, Inc.
Tokyo 103-8666 (JP)

(72) Inventors:
- MISUMI, Jun
  Iyo-gun, Ehime 791-3193 (JP)
- SHINOHARA, Kyoko
  Iyo-gun, Ehime 791-3193 (JP)
- HONMA, Masato
  Iyo-gun, Ehime 791-3193 (JP)

(74) Representative: Mewburn Ellis LLP
Aurora Building
Counterslip
Bristol BS1 6BX (GB)

# (54) FIBER-REINFORCED RESIN, AND INTEGRALLY MOLDED PRODUCT

(57) The main object is to provide a fiber-reinforced resin that can be welded to another member via a thermoplastic resin and that is less likely to be damaged even when welded at a high temperature. A fiber-reinforced resin including a reinforcing fiber and having a cured epoxy resin region and a thermoplastic resin region disposed at the surface wherein aromatic rings account for 50% or more and 90% or less of the cured epoxy resin present in the cured epoxy resin region.

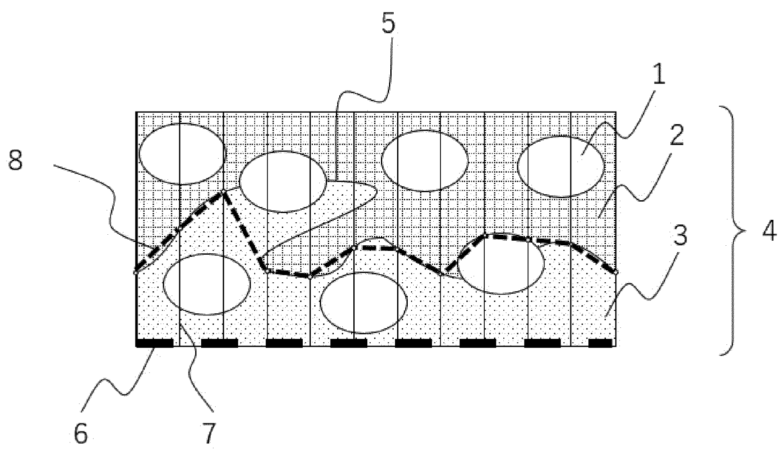


[Fig. 1]

EP 4 249 540 A1

## Description

### TECHNICAL FIELD

The present invention relates to a fiber-reinforced resin and an integrated product produced by welding a fiber-reinforced resin to another member.

### BACKGROUND ART

High in heat resistance and corrosion resistance as well as mechanical properties such as strength and stiffness, in spite of being light in weight, fiber-reinforced resins produced by combining a thermosetting resin such as epoxy resin used as matrix with a reinforcing fiber such as carbon fiber and glass fiber have been used conventionally in a wide variety of fields including aviation/aerospace, automobiles, railway vehicles, ships, civil engineering/construction, sports goods, and electronic components. However, fiber-reinforced resins that include thermosetting resins are not suitable for molding products in complicated shapes, and when producing components and structures having complicated shapes, therefore, it is necessary to first prepare fiber-reinforced resin members in relatively simple shapes and then integrating them with other members made of materials that are the same as or different from the fiber-reinforced resins (hereinafter simply referred to as other members or another member).

Useful methods for integrating fiber-reinforced resins with other members include mechanical joining techniques such as the use of bolts, rivets, screws, etc., and other joining techniques such as the use of adhesives etc. However, mechanical joining techniques require a step for pre-processing of the joining portions such as drilling, which can lead to the problem of prolonged manufacturing processes and increased manufacturing cost and the problem of a decrease in material strength due to such processing. Joining techniques that use adhesives require many steps such as the preparation of an adhesive, bonding operations including application of the adhesive, and curing, which can lead to the problem of prolonged manufacturing processes and the problem of difficulty in ensuring sufficient reliability in terms of adhesive strength.

As a solution to these problems, development efforts made in recent years have provided fiber-reinforced resins in which a thermoplastic resin layer is disposed over the surface of a fiber-reinforced resin prepared from a thermosetting resin (Patent document 1). These fiber-reinforced resins can be joined easily to other members by welding via the thermoplastic resin layer.

### PRIOR ART DOCUMENTS

### PATENT DOCUMENTS

Patent document 1: International Publication WO 2004/060658

### SUMMARY OF INVENTION

### PROBLEMS TO BE SOLVED BY THE INVENTION

In applications where heat resistance is required, in particular, when a resin with a high melting point such as super engineering plastics is used as material for the thermoplastic resin layer of a fiber-reinforced resin that has such a thermoplastic resin layer thereon, welding it to another member requires a high temperature of 300°C or more, and in this step, the surrounding epoxy resin is also exposed to the high temperature of 300°C or higher. Epoxy resins tend to start decomposing rapidly at about 300°C, and therefore, if welding is performed at a high temperature of about 300°C, it is feared that damage may occur due to the decomposition of the epoxy resins.

The main object of the present invention is to provide a fiber-reinforced resin that can be welded to other members via a thermoplastic resin and that is less likely to be damaged even when it is undergoing such high-temperature welding.

### MEANS OF SOLVING THE PROBLEMS

To solve these problems, the fiber-reinforced resin according to the present invention is a fiber-reinforced resin that contains a reinforcing fiber and has a cured epoxy resin region and a thermoplastic resin region disposed at the surface wherein aromatic rings account for 50% or more and 90% or less of the cured epoxy resin that is present in the cured epoxy resin region.

ADVANTAGEOUS EFFECTS OF THE INVENTION

If the fiber-reinforced resin according to the present invention is used, it will be possible to produce an integrated product that is less likely to be damaged when the thermoplastic resin region is welded to another member and that has high tensile shear joining strength.

BRIEF DESCRIPTION OF THE DRAWINGS

[Fig. 1] This gives a schematic diagram of a cross-section perpendicular to the plane of the fiber-reinforced resin according to the present invention and assists the description of the undermentioned measuring methods for the roughness average length RSm and the roughness average height Rc.

DESCRIPTION OF PREFERRED EMBODIMENTS

In the present DESCRIPTION, when a range is defined by two figures with a "-" or "to" in between, the range is inclusive of the figures.

The fiber-reinforced resin according to the present invention is a fiber-reinforced resin that contains a reinforcing fiber and has a cured epoxy resin region and a thermoplastic resin region disposed at the surface wherein aromatic rings account for 50% or more and 90% or less of all molecules that constitute the cured epoxy resin present in the cured epoxy resin region.

The fiber-reinforced resin according to the present invention has a thermoplastic resin region disposed at the surface thereof and accordingly, it serves to produce an integrated product by welding another member to the thermoplastic resin region disposed over the surface. Here, there are no specific limitations on such "another member". It may be, for example, a member containing a thermoplastic resin or a member made of a metal material, and it may also be of the fiber-reinforced resin according to the present invention. In the case where an integrated product is produced by welding another member to the thermoplastic resin region disposed over the surface of the fiber-reinforced resin according to the present invention, such another member will be occasionally referred to as an adherend. There are no specific limitations on the thermoplastic resin contained in such a thermoplastic resin region, but examples thereof include polyester based resins (such as polyethylene terephthalate, polybutylene terephthalate, polytrimethylene terephthalate, polyethylene naphthalate, and liquid crystal polyester), polyolefin based resins (such as polyethylene, polypropylene, and polybutylene), styrene based resins, polyurethane resin, polyoxymethylene, polyamide based resins (such as polyamide 6, polyamide 66, other similar aliphatic polyamides, semi-aromatic polyamides, and alicyclic polyamides), polycarbonate, polymethyl methacrylate, polyvinyl chloride, polyphenylenesulfide, polyphenylene ether, modified polyphenylene ether, polyimide, polyamideimide, polyetherimide, polysulfone, modified polysulfone, polyethersulfone, polyketone, polyarylene ether ketones (such as polyetherketone, polyetheretherketone, and polyetherketoneketone), polyallylate, polyethernitrile, phenol based resins, and phenoxy resin. In addition, copolymers and modifications of the thermoplastic resins listed above and/or resin blends of two or more of these resins may also be used. Of these, polyketone, polyetherketone, polyetheretherketone, polyetherketoneketone, other similar polyarylene ether ketones, alicyclic polyamide, semi-aromatic polyamide, polyphenylenesulfide, polyetherimide, polyethersulfone, polysulfone, modified polysulfone, and polyamideimide are particularly preferable because they serve to produce fiber-reinforced resins with high heat resistance.

In particular, in the fiber-reinforced resin according to the present invention, both the cured epoxy resin region and the surface thermoplastic resin region, which will be described later, are in the form of layers disposed adjacent to each other. The expression "in the form of layers disposed adjacent to each other" refers to a state wherein as illustrated in Fig. 1, for example, which shows a cross-section exposed by cutting a prepreg perpendicular to its plane direction, a thermoplastic resin region 2 and a cured epoxy resin region 3 that are continuous in in-plane directions are disposed in close contact with each other while sharing an interface 5. If the thermoplastic resin is in the form of particles, fibers, nonwoven fabric, etc., instead of a continuous layer, the areal proportion of the epoxy resin exposed at the surface will increase while the proportion of the area of the outermost face covered by the thermoplastic resin will decline, leading to a larger decrease in weldability.

The areal weight of the thermoplastic resin region is preferably 10 $g/m^2$ or more because in that case, a large joining strength will be developed with the adherend. The areal weight of the thermoplastic resin region is more preferably 20 $g/m^2$. There are no specific limitations on the upper limit, but the areal weight of the thermoplastic resin region is preferably 500 $g/m^2$ or less in order to produce a fiber-reinforced resin with high specific strength and high specific elastic modulus while preventing the quantity of the thermoplastic resin from being excessively large relative to the reinforcing fiber. Here, the areal weight of the thermoplastic resin region means the mass (g) of the thermoplastic resin present in the thermoplastic resin region contained in 1 $m^2$ of the fiber-reinforced resin.

Examples of the reinforcing fiber that can be used in the fiber-reinforced resin according to the present invention

include glass fiber, carbon fiber, metal fiber, aromatic polyamide fiber, polyaramid fiber, alumina fiber, silicon carbide fiber, boron fiber, and basalt fiber. These may be used singly or as a combination of two or more thereof.

As the reinforcing fibers, a carbon fiber that is low in specific gravity and high in strength and elastic modulus is used suitably. Commercial products of carbon fiber include Torayca (registered trademark) T800G-24K, Torayca (registered trademark) T800S-24K, Torayca (registered trademark) T700G-24K, Torayca (registered trademark) T700S-24K, Torayca (registered trademark) T300-3K, Torayca (registered trademark) T1100G-24K, Torayca (registered trademark) M30S-18K, Torayca (registered trademark) M40J-12K, and Torayca (registered trademark) M60J-6K (all manufactured by Toray Industries, Inc.).

The reinforcing fiber to use in the fiber-reinforced resin according to the present invention preferably has a heat conductivity of 100 W/(m·K) or less. The use of a reinforcing fiber with a heat conductivity of 100 W/(m·K) or less is adopted in a preferred embodiment because in the welding step in which heat is applied to the fiber-reinforced resin, the quantity of heat transmitted to the cured epoxy resin in the fiber-reinforced resin is maintained at a low level to prevent thermal degradation of the epoxy resin. The reinforcing fiber having such a heat conductivity is more preferably carbon fiber. The heat conductivity is more preferably 50 W/(m·K) or less and still more preferably 30 W/(m·K) or less. There are no specific limitations on the lower limit of the heat conductivity of the reinforcing fiber, but for common carbon fibers, the lower limit is 3 W/(m·K).

In addition, the reinforcing fiber used in the fiber-reinforced resin according to the present invention preferably has a strand tensile strength of 5.5 GPa or more as measured according to the resin-impregnated strand test method specified in JIS R7608 (2007) because it serves to produce a fiber-reinforced resin having a high joining strength in addition to a high tensile strength. Its strand tensile strength is more preferably 5.8 GPa or more. The joining strength referred to above is the strength of a joining that is made by welding to another member via the surface thermoplastic resin region and it refers to the tensile shear joining strength that is specified in ISO4587:1995 (JIS K6850 (1994)).

These reinforcing fibers may have treated surfaces. Useful surface treatment methods include metal cladding treatment, treatment with a coupling agent, treatment with a sizing agent, and attachment of an additive.

In particular, it is preferable to use a reinforcing fiber having a surface free energy of 10 $mJ/m^2$ or more and 50 $mJ/m^2$ or less as measured by the Wilhelmy method. If it is controlled in this range, the aforementioned reinforcing fibers will exhibit high affinity with the aforementioned epoxy resins and thermoplastic resins and develop a high tensile shear joining strength when joined to another member by welding via the surface thermoplastic resin region. In addition, it also serves to suppress the agglomeration of reinforcing fibers, ensure enhanced dispersion of reinforcing fibers in the molded article, and reduce the variation (coefficient of variation) in tensile shear joining strength. It is preferable for the reinforcing fiber to have a surface free energy of 15 $mJ/m^2$ or more and 40 $mJ/m^2$ or less, more preferably 18 $mJ/m^2$ or more and 35 $mJ/m^2$ or less. A good method for controlling the surface free energy of such a reinforcing fiber is oxidizing its surface to adjust the quantity of oxygen-containing functional groups such as carboxyl group and hydroxyl group and another good control method is attaching a compound or a plurality of compounds to the surface. When a plurality of compounds are to be attached to the surface, it may be effective to use a mixture of a compound with a small surface free energy and one with a large surface free energy. The surface free energy can be determined by measuring the contact angles between the reinforcing fiber and three different solvents (purified water, ethylene glycol, and tricresyl phosphate) and calculating the surface free energy using the Owens approximation formula. The procedure is outlined below, but details relating to measurement and equipment are not particularly limited thereto.

First, using DCAT11, manufactured by DataPhysics, a monofilament is taken out from a reinforcing fiber bundle, cut into eight pieces with lengths of 12±2 mm, and pasted in parallel to each other with spacings of 2 to 3 mm between the monofilament pieces on a dedicated holder (FH12, flat plate having a surface coated with a sticking substance). Then, the ends of the monofilaments are cut and flushed, and they were set on DCAT11. In a measuring run, a cell containing one of the solvents is brought closer to the bottom of the bundle of eight monofilaments at a speed of 0.2 mm/s to immerse the monofilaments to a position 5 mm from the ends. Then, the monofilaments are pulled up at a speed of 0.2 mm/s. This procedure is repeated four times. The force F that the monofilaments receive while in the liquid is measured using an electronic balance. Using these measurements, the contact angle θ is calculated by the equation given below.

$$\text{COS}\theta = (\text{force F(mN) received by 8 monofilaments}) / ((8\ (\text{number of monofilaments}) \times \text{circumference (m) of monofilaments} \times \text{surface tension of solvent } (mJ/m^2))$$

Here, measurements are taken from monofilaments sampled from three different portions of a reinforcing fiber bundle. This means that a total of 24 monofilaments are sampled from one reinforcing fiber bundle and the measured contact angle values are averaged over them.

The surface free energy $\gamma_f$ of a reinforcing fiber is calculated as the sum of the polar component $\gamma^p{}_f$ of the surface free energy and the non-polar component $y^d{}_f$ of the surface free energy. The polar component $\gamma^p{}_f$ of the surface free

energy is determined by substituting the components of surface tension and contact angle of each solvent into the following Owens approximation formula (including polar component and non-polar component of surface tension, and contact angle $\theta$, which are characteristic of a solvent), plotting it on an X-Y plane, and calculating the square of the slope a of a straight line drawn by the least square method. The non-polar component $\gamma^d_f$ of the surface free energy is calculated from the square of the intercept b. The surface free energy $\gamma_f$ of the reinforcing fiber is the sum of the square of the slope a and the square of the intercept b.

$$Y = a \cdot X + b$$

X = √(polar component (mJ/m$^2$) of surface tension of solvent) / √(non-polar component (mJ/m$^2$) of surface tension of solvent)

Y = (1 + COSθ) · (polar component (mJ/m$^2$) of surface tension of solvent) / 2√(non-polar component (mJ/m$^2$) of surface tension of solvent)

Polar component $\gamma^p_f$ of surface free energy of reinforcing fiber = $a^2$

Non-polar component $\gamma^d_f$ of surface free energy of reinforcing fiber = $b^2$

Total surface free energy $\gamma_f = a^2 + b^2$

The polar component and non-polar component of the surface tension of each solvent is as described below.

• Purified water

surface tension 72.8 mJ/m$^2$, polar component 51.0 mJ/m$^2$, non-polar component 21.8 (mJ/m$^2$)

• Ethylene glycol

surface tension 48.0 mJ/m$^2$, polar component 19.0 mJ/m$^2$, non-polar component 29.0 (mJ/m$^2$)

• Tricresol phosphate

surface tension 40.9 mJ/m$^2$, polar component 1.7 mJ/m$^2$, non-polar component 39.2 (mJ/m$^2$)

In regard to the form and the way of alignment of the reinforcing fiber to use, an appropriate form may be selected from among a bundle of reinforcing fibers paralleled in one direction, a laminate of layers aligned in one direction, woven fabric, knit fabric, nonwoven fabric, mat, and braid, but in order to obtain a fiber-reinforced resin that is light in weight and higher in durability, it is preferable to use a prepreg in which the reinforcing fiber is in the form of continuous fibers such as long fibers (fiber bundles) paralleled in one direction and woven fabric. In addition, other forms containing discontinuous reinforcing fibers such as nonwoven fabric and mat may also be preferable from the viewpoint of shapability and shape conformity during molding.

The content by mass of the reinforcing fiber in the fiber-reinforced resin according to the present invention is preferably 30 mass% or more and 90 mass% or less, more preferably 35 mass% or more and 85 mass% or less, and still more preferably 40 mass% or more and 80 mass% or less. If the content by mass of the reinforcing fiber is 30 mass% or more, the quantity of resin is not excessively large relative to fiber, making it easy to produce a fiber-reinforced resin having high specific strength and high specific elastic modulus. If the content by mass of the reinforcing fiber is 90 mass% or less, defective impregnation with resin will be less likely to occur, serving to easily decrease the number of voids in the resulting fiber-reinforced resin.

In the cured epoxy resin that constitutes the cured epoxy resin region in the fiber-reinforced resin according to the present invention, aromatic rings account for 50% or more and 90% or less. If the proportion of aromatic rings is less than 50%, the cured epoxy resin is likely to suffer thermal decomposition in a high temperature environment, and the resulting fiber-reinforced resin will have significantly deteriorated mechanical properties such as compressive strength

and can develop only a small tensile shear joining strength when welded to another member. If the proportion of aromatic rings is 90% or more, the cured epoxy resin has poor flexibility and the resulting fiber-reinforced resin will have deteriorated mechanical properties. The proportion of aromatic rings in the cured epoxy resin is preferably 55% or more and 80% or less.

The proportion of aromatic rings in the cured epoxy resin referred to in the present DESCRIPTION means the proportion by mass of aromatic rings in the chemical structures that constitute the cured epoxy resin and is calculated by dividing the total mass of all aromatic rings in all chemical structures by the total mass of all molecules in all chemical structures. Here, if there are substituents such as methyl group in aromatic rings, the mass of the substituents is not included in the mass of the aromatic rings. For example, the structure of benzene is calculated assuming that the aromatic ring has a mass of 78.1 g/mol, and the structure of toluene is calculated assuming that the aromatic ring has a mass 77.1 g/mol.

If the chemical structures of all compounds contained in the epoxy resin composition that is available before its curing into a cured epoxy resin are known, the proportion of aromatic rings in the cured epoxy resin can be calculated from those chemical structures. If some are unknown, it can be calculated from the chemical structure of the cured epoxy resin that is identified by pyrolysis gas chromatography-mass spectrometry. In addition, for example, in the case of a cured epoxy resin containing chemical structures as represented by the formulae (1) and (2) that account for 70% and 30%, respectively, of the total number of molecules, the proportion of aromatic rings in the cured epoxy resin is calculated as described below.

$$(76.1 \times 4 \times 0.70 + (126.2 + 76.1 \times 2) \times 0.3) / (676.9 \times 0.7 + 522.6 \times 0.3) = 47.1\%$$

[Chemical compound 1]

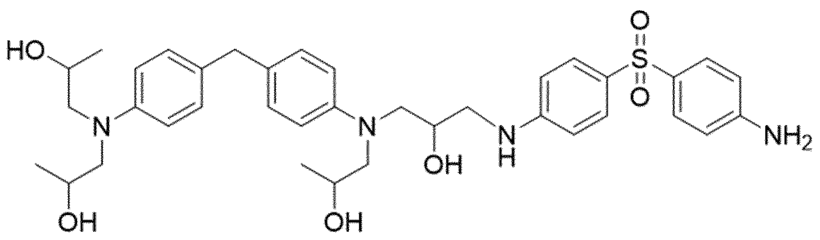

(1)

Molar weight: 676.9

[Chemical compound 2]

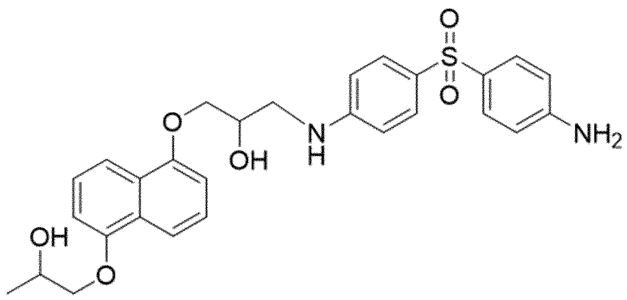

(2)

Molar weight: 522.6

From the viewpoint of high resistance to thermal degradation at high temperatures, the cured epoxy resin to use for the present invention is preferably a cured product of an epoxy resin composition that contains an epoxy resin having a polycyclic aromatic hydrocarbon skeleton or a biphenyl skeleton.

Such an epoxy resin having a polycyclic aromatic hydrocarbon skeleton may be an epoxy resin having a naphtalene group, an epoxy resin having an anthracene backbone, an epoxy resin having a phenanthrene backbone, an epoxy resin having a pyrene backbone, or an epoxy resin having a tetracene backbone. Examples thereof include naphthylene ether type epoxy resin, naphthalenediol type epoxy resin, methylene dinaphthol type epoxy resin, dinaphthol type epoxy resin, naphthol phenyl aralkyl type epoxy resin, naphthol biphenyl aralkyl type epoxy resin, and anthracene

diol type epoxy resin. Examples of such an epoxy resin having a biphenyl skeleton include biphenol diglycidyl ether and phenol biphenyl aralkyl type epoxy resin.

Furthermore, in order to ensure high resistance to thermal degradation at high temperatures and a favorable glass transition temperature, it is preferable that the cured epoxy resin to use for the present invention is a cured product of an epoxy resin composition in which the average epoxy equivalent weight over all epoxy resins is 160 g/eq or more and 255 g/eq or less. The average epoxy equivalent weight is more preferably 180 g/eq or more and 255 g/eq or less. Here, for example, in the case where two components, namely, epoxy resin 1 and epoxy resin 2, are contained, the average epoxy equivalent weight is calculated as described below. It should be noted that the epoxy equivalent weight used in the present DESCRIPTION is determined according to the method specified in JIS K7236 (2009).

Average epoxy equivalent weight (g/eq) = (parts by mass of epoxy resin 1 × epoxy equivalent weight of epoxy resin 1 + parts by mass of epoxy resin 2 × epoxy equivalent weight of epoxy resin 2) / (parts by mass of epoxy resin 1 + parts by mass of epoxy resin 2)

Calculation can be performed in the same way in the case where three or more epoxy resin components are contained, and calculation is performed as described below in the case where N epoxy resin components, namely, epoxy resin 1 to epoxy resin N, are contained.

Average epoxy equivalent weight (g/eq) = (parts by mass of epoxy resin 1 × epoxy equivalent weight of epoxy resin 1 + parts by mass of epoxy resin 2 × epoxy equivalent weight of epoxy resin 2 + ... + parts by mass of epoxy resin N × epoxy equivalent weight of epoxy resin N) / (parts by mass of epoxy resin 1 + parts by mass of epoxy resin 2 + ... + parts by mass of epoxy resin N)

Furthermore, in order to ensure high resistance to thermal degradation at high temperatures, it is preferable that the cured epoxy resin to use for the present invention is a cured product of an epoxy resin composition containing a polyamine compound in which the average active hydrogen equivalent weight is 55 g/eq or more and 100 g/eq or less. The term "polyamine compound" as used in the present DESCRIPTION is a genetic name of a compound having two or more amino groups and examples thereof include dicyandiamide, aliphatic amine compounds, aromatic amine compounds, tetramethylguanidine, thiourea added amine, and carboxylic acid hydrazide. The active hydrogen equivalent weight of a polyamine compound as referred to in the present DESCRIPTION is an active hydrogen equivalent weight value calculated from its chemical structure and its proportion identified by liquid chromatography-mass spectrometry (LC/MS). Here, for example, in the case where two components, namely, polyamine compound 1 and polyamine compound 2, are contained, the average active hydrogen equivalent weight is calculated as described below.

Average active hydrogen equivalent weight (g/eq) = (parts by mass of polyamine compound 1 × active hydrogen equivalent weight of polyamine compound + parts by mass of polyamine compound 2 × active hydrogen equivalent weight of polyamine compound 2) / (parts by mass of polyamine compound 1 + parts by mass of polyamine compound 2)

In the case where three or more polyamine compounds are contained, calculation can be performed in the same way as for epoxy resin described above.

In the case where an epoxy resin that is not an epoxy resin having a polycyclic aromatic hydrocarbon skeleton or an epoxy resin having a biphenyl skeleton is contained, examples of such an epoxy resin include bisphenol type epoxy resins such as bisphenol A type epoxy resin, bisphenol F type epoxy resin, bisphenol AD type epoxy resin, and bisphenol S type epoxy resin; brominated epoxy resins such as tetrabromobisphenol A diglycidyl ether; novolac type epoxy resins such as epoxy resin having a dicyclopentadiene backbone, phenol novolac type epoxy resin, and cresol novolac type epoxy resin; glycidyl amine type epoxy resins such as N,N,O-triglycidyl-m-aminophenol, N,N,O-triglycidyl-p-aminophenol, N,N,O-triglycidyl-4-amino-3-methyl phenol, N,N,N',N'-tetraglycidyl-4,4'-methylene dianiline, N,N,N',N'-tetraglycidyl-2,2'-diethyl-4,4'-methylene dianiline, N,N,N',N'-tetraglycidyl-m-xylylene diamine, N,N-diglycidyl aniline, and N,N-diglycidyl-o-toluidine; and others such as resorcin diglycidyl ether and triglycidyl isocyanurate.

It is preferable that an aromatic amine compound having two or more amino groups be used as the polyamine compound because it has a high reactivity and serves to produce a cured product having good mechanical properties and heat resistance. Examples of such an aromatic amine compound having two or more amino groups include diaminodiphenyl sulfone, diaminobenzanilide, diaminobenzophenone, and diaminodiphenylmethane, as well as isomers thereof, aliphatic hydrocarbon adducts thereof, and halogen group adducts thereof.

The cured epoxy resin present in the fiber-reinforced resin according to the present invention is preferably a cured product of an epoxy resin composition that forms, when heated at 180°C for 120 minutes, a cured product showing a rate of mass loss on heating of 1.0% or less when maintained at 300°C for 2 minutes. In addition, it is also preferably a cured product of an epoxy resin composition that similarly forms a cured product having a glass transition temperature of 180°C or more and 350°C or less. If the cured product has such characteristics, it serves to prevent the occurrence of damage in the welding step in which the fiber-reinforced resin is welded to another member via the surface thermoplastic resin layer. The rate of mass loss on heating at 300°C for 2 minutes is more preferably 0.7% or less, and still more preferably 0.5% or less.

The rate of mass loss on heating of a cured epoxy resin can be determined according to JIS K7120 (1987). Furthermore, the glass transition temperature can be determined according to JIS K7244-7 (2007).

For the fiber-reinforced resin according to the present invention, the interface between the cured epoxy resin region and the thermoplastic resin region preferably has a roughness average length RSm of 100 μm or less and a roughness average height Rc of 3.5 μm or more. Here, the roughness average length RSm and the roughness average height Rc of the interface between the cured epoxy resin region and the thermoplastic resin region is defined as the roughness average length RSm and the roughness average height Rc specified in JIS B0601 (2001) in a cross-sectional profile curve formed by the interface where the two resin regions are in contact with each other in a cross-section produced by cutting the fiber-reinforced resin perpendicularly to its plane direction. If the roughness average length RSm of the cross-sectional profile curve is 100 μm or less, it is preferable because not only chemical and/or physical bonding forces but also a mechanical bonding force developed by entanglement occurs to make it difficult for the cured epoxy resin region and the resin region containing a thermoplastic resin to be separated easily. There are no specific limitations on the lower limit of RSm, but it is preferably 15 μm or more in order to avoid a decrease in the mechanical bonding force attributable to stress concentration. In addition, if the roughness average height Rc of the cross-sectional profile curve is 3.5 μm or more, it is preferable because it serves to allow the adhesive strength between the cured epoxy resin region and the resin region containing a thermoplastic resin to be increased as a result not only of the development of a mechanical bonding force attributable to entanglement but also of chemical and/or physical bonding of the reinforcing fibers existing at the interface to the epoxy resin and thermoplastic resin. The roughness average height Rc of the cross-sectional profile curve is more preferably 10 μm or more, and particularly preferably 20 μm or more, where the reinforcing fiber comes more easily into contact with both resin regions to achieve stronger adhesion. There are no specific limitations on the upper limit of Rc, but it is preferably 100 μm or less in order to avoid a decrease in the mechanical bonding force attributable to stress concentration.

Here, the roughness average height Rc and the roughness average length RSm of a cross-sectional profile curve can be measured by an appropriate generally known method. Examples thereof include the method of determining them from a cross-sectional image observed by an X-ray CT scanner, the method of determining them from an elemental mapping image observed by an energy dispersive X-ray spectroscope (EDS), and the method of determining it from a cross-sectional image observed by an optical microscope, scanning electron microscope (SEM), or transmission electron microscope (TEM). For these observations, the epoxy resin and/or the thermoplastic resin may be stained to adjust the contrast. In an image obtained by any of the above methods, the roughness average height Rc and the roughness average length RSm of a cross-sectional profile curve are determined from an area 500 μm square.

Fig. 1 illustrates a typical method (measuring method 1 for elements of cross-sectional profile curve) for measuring the roughness average height Rc and the roughness average length RSm of a cross-sectional profile curve. The edge 6 of a rectangular observed image 4 that is in the cured epoxy resin region is adopted as reference line, and perpendicular guidelines 7, each extending from the cured epoxy resin region 3 into the thermoplastic resin region 2, are drawn at intervals of 5 μm. A cross-sectional profile curve 8 is defined by plotting the points where each perpendicular guideline drawn from the reference line intersects the thermoplastic resin region 2 for the first time and connecting the plotted points. The resulting cross-sectional profile curve 8 is then subjected to filtering as specified in JIS B0601 (2001), and the average roughness height Rc and the average roughness length RSm of the cross-sectional profile curve 8 are calculated.

Furthermore, in the fiber-reinforced resin according to the present invention, it is preferable that there exist reinforcing fibers that are across the interface between the cured epoxy resin region and the thermoplastic resin region and are in contact with both resin regions. The existence of such reinforcing fibers can be confirmed by observing a cross-section prepared by cutting a sample perpendicularly to the plane direction. For example, in the observed image 4 of a cross-section shown in Fig. 1, a plurality of reinforcing fibers 1 is present on the interface 5 between the thermoplastic resin region 2 and the cured epoxy resin region 3. Each reinforcing fiber 1 present on the interface 5 is in contact with

both the thermoplastic resin region 2 and the cured epoxy resin region 3. Such a state in which reinforcing fibers are surrounded by and in contact with the thermoplastic resin and the epoxy resin can be regarded as a state in which the reinforcing fibers "are across the interface and are in contact with both resin regions."

The existence of reinforcing fibers that are across the interface between the cured epoxy resin region and the thermoplastic resin region and are in contact with both resin regions serves to improve the strength of the thermoplastic resin region and increase the joining force. In addition, the reinforcing fibers being across the interface form chemical and/or physical bonding with the cured epoxy resin produced by heat-curing and the thermoplastic resin and this also serves to improve the adhesion between the cured epoxy resin region and the thermoplastic resin region after the heat-curing step and increase the joining force.

In order to allow the fiber-reinforced resin according to the present invention to have an enhanced impact resistance, an elastomer or rubber component may be added to the cured epoxy resin or the thermoplastic resin. In addition, depending on intended uses, the cured epoxy resin or the thermoplastic resin may contain other fillers or additives unless they impair the purpose of the present invention. Examples thereof include inorganic fillers, flame retardants, electric conductivity developing agents, crystal nucleating agents, ultraviolet absorbers, antioxidants, vibration damping agents, antibacterial agent, insecticides, deodorants, color protection agents, thermal stabilizers, mold releasing agents, antistatic agents, plasticizers, lubricants, coloring agents, pigments, dyes, foaming agents, bubble control agents, and coupling agents.

A typical production method for the fiber-reinforced resin according to the present invention uses a prepreg that consists mainly of an epoxy resin composition, which is to be cured into a cured epoxy resin, a reinforcing fiber, and a thermoplastic resin region at the surface and that may be combined as required with additional prepreg layers to form a preform, and they are heated under pressure for curing. Useful techniques for heating under pressure include press molding, autoclave molding, bag molding, wrapping tape molding, internal pressure molding, and hand lay-up. Other adoptable production methods for the fiber-reinforced resin according to the present invention include filament winding molding, pultrusion molding, resin injection molding, and resin transfer molding.

Furthermore, in the integrated product according to the present invention, the fiber-reinforced resin according to the present invention is welded to another member via a thermoplastic resin region, and since it is welded to another member via a thermoplastic resin region, the adhesion portion between the fiber-reinforced resin portion and the other member has a large tensile shear joining strength.

EXAMPLES

The invention is described in more detail below with reference to examples. However, it should be noted that the scope of the present invention is not limited to these examples. Hereinafter, the term "parts" used to refer to the proportion of a component material means "parts by mass" unless otherwise specified. The various measurements were performed in an environment at a temperature of 23°C and a relative humidity of 50% unless otherwise specified.

<Materials used in examples and comparative examples>

[Epoxy resin]

- naphthylene ether type epoxy resin (EPICLON (registered trademark) HP-6000, manufactured by DIC Corporation, epoxy equivalent weight 250 g/eq) · biphenyl aralkyl type epoxy resin (NC-3000, manufactured by Nippon Kayaku Co., Ltd., epoxy equivalent weight 275 g/eq)
- tetraglycidyl diaminodiphenylmethane (SUMI-EPOXY (registered trademark) ELM434, manufactured by Sumitomo Chemical Co., Ltd., epoxy equivalent weight 120 g/eq) · bisphenol F type epoxy resin (EPICLON (registered trademark) 830, manufactured by DIC Corporation, epoxy equivalent weight 172 (g/eq))
- naphthol phenyl aralkyl type epoxy resin (NC-7000L, manufactured by Nippon Kayaku Co., Ltd., epoxy equivalent weight 230 g/eq)

[Polyamine compound]

- 4,4'-diaminodiphenyl sulfone (SEIKACURE S, manufactured by Wakayama Seika Kogyo Co., Ltd., active hydrogen equivalent weight 62 g/eq)

[Viscosity modifier (thermoplastic resin soluble in epoxy resin)]

- polyethersulfone (Sumika Excel (registered trademark) PES5003P, manufactured by Sumitomo Chemical Co., Ltd.)

[Reinforcing fiber]

With reference to Japanese Unexamined Patent Publication (Kokai) No. 2010-255168, acrylonitrile copolymers, copolymerized with itaconic acid, were spun and calcined to prepare carbon fibers 1 to 4 that differed in heat conductivity (before coating with sizing agent). A 1 mass% solution was prepared by mixing and dissolving a sizing agent compound 1 in acetone, and each compound was applied to the aforementioned carbon fibers 1 to 4 by the immersion method, followed by heat treatment at 210°C for 90 seconds. Carbon fibers 1 to 4 which had a surface free energy of 20 mJ/$m^2$ were prepared by adjusting the amount of each adhered compound to 0.5 part by mass relative to 100 parts by mass of the carbon fiber that had each compound adhered thereon. Each carbon fiber had characteristics as described below.

- carbon fiber 1: strand tensile strength 5.9 GPa, tensile strand modulus 294 GPa, heat conductivity 10 W/(m·K)
- carbon fiber 2: strand tensile strength 5.5 GPa, tensile strand modulus 294 GPa, heat conductivity 22 W/(m·K)
- carbon fiber 3: strand tensile strength 4.4 GPa, tensile strand modulus 377 GPa, heat conductivity 69 W/(m·K)
- carbon fiber 4: strand tensile strength 4.1 GPa, tensile strand modulus 475 GPa, heat conductivity 105 W/(m·K)

In addition, sizing agent compounds 2 to 6 were attached to carbon fiber 1 (before coating with sizing agent) by the same method as described above to prepare carbon fibers that differed in surface free energy.

The sizing agent compound used for each carbon fiber and the surface free energy after coating with the sizing agent were as described below.

- sizing agent compound 1: polyethylene glycol diglycidyl ether (DENACOL (registered trademark) EX-841, manufactured by Nagase ChemteX Corporation), surface free energy 20 mJ/$m^2$
- sizing agent compound 2: bisphenol A type diglycidyl ether (jER (registered trademark) 828, manufactured by Mitsubishi Chemical Corporation), surface free energy 9 mJ/$m^2$
- sizing agent compound 3: sorbitol polyglycidyl ether (DENACOL (registered trademark) EX-614B, manufactured by Nagase ChemteX Corporation), surface free energy 32 mJ/$m^2$
- sizing agent compound 4: bisphenol A type propylene oxide 24 moles adduct, surface free energy 18 mJ/$m^2$
- sizing agent compound 5: polyallyl amine (PAA-01, manufactured by Nippon Shokubai Co., Ltd.), surface free energy 32 mJ/$m^2$
- sizing agent compound 6: polyethylene imine (SP-012, manufactured by Nippon Shokubai Co., Ltd.), surface free energy 33 mJ/$m^2$

[Thermoplastic resin]

- PPS: film with an areal weight of 120 g/$m^2$ made of polyphenylenesulfide (Torelina (registered trademark) A900 (manufactured by Toray Industries, Inc., melting point 278°C, glass transition temperature 92°C))
- PEEK: film with an areal weight of 120 g/$m^2$ made of polyetheretherketone (PEEK 450G (manufactured by Victrex, melting point 343°C, glass transition temperature 143°C))
- PEKK: film with an areal weight of 120 g/$m^2$ made of polyetherketone ketone (KEPSTAN (registered trademark) 6002 (manufactured by Arkema K.K., melting point 300°C, glass transition temperature 160°C))
- PEI: film with an areal weight of 120 g/$m^2$ made of polyetherimide (ULTEM (registered trademark) 1010, manufactured by SABIC, glass transition temperature 217°C)
- semi-aromatic PA: film with an areal weight of 120 g/$m^2$ made of polyamide 6T (melting point 320°C, glass transition temperature 125°C))

Here, the melting point of each thermoplastic resin was measured using a differential scanning calorimeter DSC according to JIS K7121 (2012). If a plurality of melting points was observed, such as in the case of a mixture, the highest melting point was adopted as the melting point of the thermoplastic resin.

<Evaluation methods>

[Characteristics of cured epoxy resin]

The epoxy resin composition prepared in each Reference example given below was injected in a mold, heated in a hot air drier from 30°C to 180°C at a rate of 1.5°C/min, heat-cured for 120 minutes, and cooled to 30°C at a rate of 2.5°C/min to prepare a plate-like cured epoxy resin with a thickness of 2 mm.

A test piece with a width of 12.7 mm and a length of 45 mm was cut out from the cured resin plate prepared by the above method, and then the test piece was dried in a vacuum oven at 60°C for 24 hours and subjected to dynamic viscoelasticity test according to JIS K7244-7 (2007) to provide a storage elastic modulus curve. In this storage elastic modulus curve, the temperature at the intersection of the tangent line in the glass state and the tangent line in the transition state was adopted as the glass transition temperature.

In addition, a plate-like cured resin prepared by the above method was crushed and an evaluation sample of about 10 mg was taken and subjected to measurement of the rate of mass loss on heating according to JIS K7120 (1987) using a thermogravimetric differential thermal analyzer. In all measuring runs, furthermore, air was used as the inflow gas. For the determination of the rate of mass loss on heating in the heating processes from room temperature to 300°C and from room temperature to 350°C, the temperature was raised at a temperature ramp rate of 50°C/min over a measuring temperature range from 25°C to 400°C and the rate of mass loss on heating was measured when the temperature reached 300°C or 350°C. For isothermal measurement, heating was started from 200°C and, after reaching a temperature of 300°C, the sample was maintained at 300°C for 2 minutes, followed by measuring the rate of mass loss on heating.

[Structure observation of fiber-reinforced resin]

A cross-section for observation was prepared by cutting a fiber-reinforced resin perpendicularly to the plane direction and observed under an optical microscope to provide a photographed image at a magnification of 1,000 times. In the case where, in the image obtained, reinforcing fibers were present at the interface between the thermoplastic resin region and the cured epoxy resin region and also where the reinforcing fibers were in contact with both the thermoplastic resin region and the cured epoxy resin region, it was considered that there exited a state in which "reinforcing fibers were across the interface between the two resin regions while being in contact with them". In an observation area 500 μm square randomly selected in the image obtained, the roughness average length RSm and the roughness average height Rc defined in JIS B0601 (2001) were calculated for elements of the cross-sectional profile curve determined by the measuring method 1 for elements of cross-sectional profile curve.

[Compression strength of fiber-reinforced resin]

A tab was bonded to a fiber-reinforced resin according to SACMA-SRM 1R-94, and then a rectangular test piece with a length of 80 mm and a width of 15 mm was cut out in such a manner that the axis direction of the reinforcing fibers coincided with the length direction of the test piece. After drying in a vacuum oven at 60°C for 24 hours, the test piece prepared above was subjected to compression strength test that was performed according to SACMA-SRM 1R-94 using a universal testing machine (Instron (registered trademark) 5565-type P8564, manufactured by Instron Japan Co., Ltd.) under the three different sets of measuring conditions specified below.

1) The test piece was not treated particularly and measurement of its compression strength was performed in an environment at 23°C. (non-treatment conditions)
2) The test piece was subjected to high temperature exposure treatment in which it was held for 2 minutes between heated plates maintained at 300°C, and measurement of its compression strength was performed in an environment at 23°C.
3) The test piece was subjected to water absorption treatment in which it was immersed in hot water at 71 °C for 14 days, and measurement of its compression strength was performed in a high temperature environment at 120°C.

An evaluation of the test piece was made as described below based on the measurement results obtained in the above section 2). Results are shown in Tables 2 to 6.

1.4 GPa or more: A
1.2 GPa or more and less than 1.4 GPa: B
1.0 GPa or more and less than 1.2 GPa: C
less than 1.0 GPa: D (unacceptable)

Furthermore, an evaluation of the test piece was made as described below based on the results of measurement obtained in the above section 3). Results are shown in Tables 2 to 6.

1.2 GPa or more: A
1.0 GPa or more and less than 1.2 GPa: B
0.8 GPa or more and less than 1.0 GPa: C
less than 0.8 GPa: D (unacceptable)

[Tensile shear joining strength of integrated product]

An integrated product was prepared and a tab was bonded thereto according to ISO4587:1995 (JIS K6850 (1994)), followed by cutting it to a width of 25 mm to provide a test piece as designed.
The resulting test piece was dried in a vacuum oven for 24 hours and subjected to measurement of the tensile shear joining strength at an environmental temperature of 23°C according to ISO4587:1995 (JIS K6850 (1994)), followed by its evaluation as described below based on the results of measurement. The coefficient of variation was determined by calculating the standard deviation and average of five measurements of the tensile shear joining strength and dividing the standard deviation by the average. Results are shown in Tables 2 to 6.

28 MPa or more: A
25 MPa or more and less than 28 MPa: B
20 MPa or more and less than 25 MPa: C
less than 20 MPa: D (unacceptable)

<Reference examples 1 to 7: Preparation of epoxy resin composition>

The epoxy resin, polyamine compound, and viscosity modifier specified in Table 1 were put in a kneading device and heated and kneaded to dissolve the viscosity modifier. Here, the figures given in Table 1 to show the proportions of these components are in parts by mass relative to the total quantity of the epoxy resins, which represents 100 parts by mass. Subsequently, while continuing the kneading operation, the temperature was lowered to 100°C or less and a polyamine compound specified in Table 1 was added along with a properly selected curing agent, followed by stirring. Epoxy resin compositions for Reference examples 1 to 7 were prepared in this way.

[Table 1]

[Table 1]

| | | | Reference example 1 | Reference example 2 | Reference example 3 | Reference example 4 | Reference example 5 | Reference example 6 | Reference example 7 |
|---|---|---|---|---|---|---|---|---|---|
| epoxy resin composition | epoxy resin / epoxy equivalent weight (g/eq) | EPICLON HP-6000/250 | 50 | | 35 | 100 | | | 20 |
| | | NC-3000/275 | | 50 | | | | | |
| | | ELM434/120 | 50 | 50 | 65 | | 50 | 50 | 80 |
| | | EPICLON830/172 | | | | | | 50 | |
| | | NC-7000 L/230 | | | | | 50 | | |
| | polyamine compound | 4,4'-diaminodiphenyl sulfone | 38 | 37 | 42 | 25 | 39 | 44 | 46 |
| | viscosity modifier | PES5003 P | 10 | 10 | 10 | 10 | 10 | 10 | 10 |
| | proportion of aromatic rings (wt%) | | 54 | 55 | 51 | 64 | 51 | 49 | 48 |
| | average epoxy equivalent weight (g/eq) | | 185 | 198 | 166 | 250 | 175 | 146 | 146 |
| | average active hydrogen equivalent weight (g/eq) | | 62 | 62 | 62 | 62 | 62 | 62 | 62 |
| properties of cured epoxy resin | | glass transition temperature (°C) | 214 | 197 | 220 | 199 | 191 | 209 | 228 |
| | | room temperature → 300°C rate of mass loss on heating (%) | 0.68 | 0.89 | 0.93 | 0.37 | 0.90 | 1.30 | 1.25 |
| | | room temperature → 350°C rate of mass loss on heating (%) | 1.14 | 1.57 | 1.65 | 0.50 | 1.62 | 2.30 | 2.27 |
| | | rate of mass loss on heating at 300°C for 2 min (%) | 0.38 | 0.53 | 0.77 | 0.07 | 0.71 | 1.16 | 1.14 |

<Preparation of fiber-reinforced resin and integrated product>

[Examples 1 to 5 and Comparative examples 1 and 2: Influence of proportion of aromatic rings in cured epoxy resin]

An epoxy resin composition prepared in each of Reference examples 1 to 7 was spread over a piece of release paper using a knife coater in such a manner that the areal weight of resin was 100 g/$m^2$, thereby forming an epoxy resin film. A reinforcing fiber sheet (with an areal weight of 193 g/$m^2$) containing filaments of the carbon fiber 1 (coated with the sizing agent compound 1) aligned in one direction was pulled out and, while driving it to travel in a direction, a resin sheet of a thermoplastic resin (PPS) with an areal weight of 120 g/$m^2$ was supplied onto the reinforcing fiber sheet. Then, the thermoplastic resin was heated and melted using an IR heater so that it was adhered over one entire surface of the reinforcing fiber sheet. Then, it was pressed by a nip roll having a surface temperature that was lower by 100°C than the melting point of the thermoplastic resin in order to impregnate the reinforcing fiber sheet with PPS, followed by cooling to provide an intermediate material. Next, the aforementioned epoxy resin film was laid over that surface of the intermediate material that was opposite to the one impregnated with the thermoplastic resin, and the intermediate material was impregnated with the epoxy resin composition while heating and pressing using a heat roll device, thereby providing a prepreg [I].

An epoxy resin composition prepared in each of Reference examples 1 to 7 was spread over a piece of release paper using a knife coater in such a manner that the areal weight of resin was 50 g/$m^2$, thereby forming an epoxy resin film. Sheets of this epoxy resin film were attached to both sides of a reinforcing fiber sheet (with an areal weight of 193 g/$m^2$) containing the carbon fiber 1 arranged in one direction, and the reinforcing fiber was impregnated with the epoxy resin composition while heating and pressing them using a heat roll device, thereby providing a prepreg [II].

The prepregs [I] and [II] prepared as described above were cut to predetermined size to provide two sheets of the prepreg [I] and four sheets of the prepreg [II]. A six layer laminate was prepared in which the two sheets of the prepreg [I] formed the outermost layer of each of the two sides, with the sheets of the prepreg [II] being interposed in between, to produce a preform in which all reinforcing fibers were aligned in the same direction. Here, the lamination was performed so that the two outermost layers on both sides of the preform were prepreg [I] sheets and that both outermost surfaces of the preform were covered with thermoplastic resin (PPS) layers. Specifically, two sheets of the prepreg [I] sandwiched four sheets of the prepreg [II], and the PPS-impregnated surface of each prepreg [I] sheet constituted each outermost surface. This preform was set in a press mold, and while maintaining this shape using jigs and spacers as required, it was heated at 180°C for 120 minutes under a pressure of 0.6 MPa applied by a pressing machine, thereby providing a fiber-reinforced resin for compression strength evaluation and cross-sectional observation.

The prepregs [I] and [II] prepared as described above were cut to predetermined size to provide two sheets of the prepreg [I] and six sheets of the prepreg [II]. Defining the axis direction of the reinforcing fiber as 0° and defining the direction perpendicular to the axis as 90°, layers were laminated in the structure of $[0°/90°]_{2s}$ (the symbol s denotes mirror symmetry) to form a preform. Here, the lamination was performed so that the two outermost layers on both sides of the preform were prepreg [I] sheets and that both outermost surfaces of the preform were covered with thermoplastic resin (PPS) layers. Specifically, two sheets of the prepreg [I] sandwiched six sheets of the prepreg [II], and the PPS-impregnated surface of each prepreg [I] sheet constituted each outermost surface. This preform was set in a press mold, and while maintaining this shape using jigs and spacers as required, it was heated at 180°C for 120 minutes under a pressure of 0.6 MPa applied by a pressing machine, thereby providing a fiber-reinforced resin for tensile shear joining strength evaluation.

In addition, the resulting fiber-reinforced resin for tensile shear joining strength evaluation was cut to provide two test pieces having a shape with a width of 250 mm and a length of 92.5 mm, wherein the 0° direction is the length direction of the test pieces, and they were dried for 24 hours in a vacuum oven. Then, the two panels cut to a shape with a width of 250 mm and a length of 92.5 mm were laid one on the other, with the 0° direction coinciding the length direction, to prepare a stack with a width of 250 mm and a length of 12.5 mm, which was maintained at 300°C for 2 minutes under a pressure of 3 MPa to weld the surface layers in contact with each other, thereby providing an integrated product for tensile shear joining strength evaluation.

Table 2 shows results of evaluation for physical properties etc. of the fiber-reinforced resins and integrated products.

[Table 2]

[Table 2]

| | | Example 1 | Example 2 | Example 3 | Example 4 | Example 5 | Comparative example 1 | Comparative example 2 |
|---|---|---|---|---|---|---|---|---|
| epoxy resin composition | No. of Reference example | Reference example 1 | Reference example 2 | Reference example 3 | Reference example 4 | Reference example 5 | Reference example 6 | Reference example 7 |
| | proportion of aromatic rings (%) | 54 | 55 | 51 | 64 | 51 | 49 | 48 |
| thermoplastic resin | | PPS | | | | | | |
| reinforcing fiber | | carbon fiber 1 | | | | | | |
| fiber-reinforced resin | reinforcing fiber being across interface between two resin regions and in contact with them | present | | | | | | |
| | roughness average length RSm at interface (μm) | 48 | 49 | 48 | 46 | 47 | 45 | 46 |
| | roughness average height Rc at interface (μm) | 21 | 22 | 22 | 22 | 22 | 24 | 26 |
| fiber-reinforced resin | 1) compression strength (under nontreatment conditions) (GPa) | 1.62 | 1.58 | 1.64 | 1.60 | 1.58 | 1.56 | 1.65 |
| | 120°C | 9.1 | | | | | 9.1 | |
| | 2) compression strength after heating at 300°C (GPa) | A 1.58 | A 1.51 | A 1.50 | A 1.60 | A 1.47 | D 0.55 | D 0.60 |
| | compression strength after heating at 300°C / compression strength (nontreatment) (%) | 98 | 96 | 91 | 100 | 93 | 35 | 36 |
| | 3) compression strength at 120°C after water absorption (GPa) | A 1.22 | B 1.15 | A 1.20 | A 1.28 | B 1.13 | B 1.16 | B 1.15 |
| integrated product | tensile shear joining strength (MPa) | B 27.1 | B 26.9 | B 26.7 | B 27.3 | B 26.2 | D 18.6 | D 19.2 |
| | coefficient of variation (CV) in tensile shear joining strength (%) | 4.7 | 4.9 | 4.9 | 4.7 | 5.2 | 5.2 | 5.4 |

[Examples 6 to 8: Influence of heat conductivity of reinforcing fiber]

Except for using the epoxy resin composition prepared in Reference example 1 and using the carbon fiber species specified in Table 3 to form reinforcing fiber sheets, the same procedure as in Example 1 was carried out to produce fiber-reinforced resins and integrated products.

Table 3 shows results of evaluation for physical properties etc. of the fiber-reinforced resins and integrated products along with the evaluation results obtained in Example 1.

[Table 3]

[Table 3]

| | | Example 1 | Example 6 | Example 7 | Example 8 |
|---|---|---|---|---|---|
| epoxy resin composition | | Reference example 1 | | | |
| thermoplastic resin | | PPS | | | |
| reinforcing fiber | reinforcing fiber | carbon fiber 1 | carbon fiber 2 | carbon fiber 3 | carbon fiber 4 |
| | heat conductivity (mJ/m$^2$) | 10 | 22 | 69 | 105 |
| fiber-reinforced resin | 1) compression strength (under nontreatment conditions) (GPa) 120°C | 1.62 9.1 | 1.44 | 1.32 9.1 | 1.18 9.1 |
| | 2) compression strength after heating at 300°C (GPa) | A 1.58 | B 1.35 | C 1.18 | C 1.02 |
| | compression strength after heating at 300°C / compression strength (nontreatment) (%) | 98 | 94 | 89 | 86 |
| | 3) compression strength at 120°C after water absorption (GPa) | A 1.22 | B 1.10 | B 1.03 | C 0.85 |
| integrated product | tensile shear joining strength (MPa) | B 27.1 | B 26.4 | B 25.3 | C 23.8 |
| | coefficient of variation (CV) in tensile shear joining strength (%) | 4.7 | 5.1 | 5.5 | 5.8 |

[Examples 9 to 12 and Comparative examples 3 and 4: Influence of thermoplastic resin species]

The epoxy resin compositions prepared in Reference examples 1, 6, and 7 were used. The thermoplastic resin species were replaced as specified in Table 4, and accordingly the welding temperatures for producing integrated products were changed as specified in Table 4. Except for these, the same procedure as in Example 1 was carried out to produce fiber-reinforced resins and integrated products.

Table 4 shows results of evaluation for physical properties etc. of the fiber-reinforced resins and integrated products along with the evaluation results obtained in Example 1.

[Table 4]

[Table 4]

| | | Example 1 | Example 9 | Example 10 | Example 11 | Example 12 | Comparative example 3 | Comparative example 4 |
|---|---|---|---|---|---|---|---|---|
| epoxy resin composition | | Reference example 1 | | | | | Reference example 6 | Reference example 7 |
| thermoplastic resin | | PPS | PEEK | PEKK | PEI | semi-aromatic PA | PEEK | PEKK |
| reinforcing fiber | | carbon fiber 1 | | | | | | |
| fiber-reinforced resin | reinforcing fiber being across interface between two resin regions and in contact with them | present | | | | | | |
| | roughness average length RSm at interface (μm) | 50 | 47 | 42 | 47 | 44 | 44 | 48 |
| | roughness average height Rc at interface (μm) | 22 | 21 | 23 | 22 | 22 | 23 | 23 |
| fiber-reinforced resin | 1) compression strength (under nontreatment conditions) (GPa) | 1.62 | 1.63 | 1.63 | 1.62 | 1.61 | 1.58 | 1.65 |
| | 2) compression strength after heating at 300°C (GPa) | A 1.58 | A 1.60 | A 1.60 | A 1.59 | A 1.58 | D 0.57 | D 0.59 |
| | compression strength after heating at 300°C / compression strength (nontreatment) (%) | 98 | 98 | 98 | 98 | 98 | 36 | 36 |
| | 3) compression strength at 120°C after water absorption (GPa) | A 1.22 | A 1.23 | A 1.23 | A 1.22 | A 1.21 | B 1.18 | B 1.18 |
| integrated product | welding temperature (°C) | 300 | 360 | 320 | 300 | 320 | 360 | 320 |
| | tensile shear joining strength (MPa) | B 27.1 | A 30.4 | A 30.1 | A 29.1 | A 30.1 | D 15.2 | D 16.3 |
| | coefficient of variation (CV) in tensile shear joining strength (%) | 4.7 | 4.8 | 4.7 | 4.7 | 4.7 | 5.0 | 5.3 |

[Example 13: Influence of reinforcing fibers being across cured epoxy resin region and thermoplastic resin region]

For Example 13, a fiber-reinforced resin containing no reinforcing fibers being across the interface between the two resin regions was prepared by the procedure described below. A prepreg [II] was produced using the epoxy resin composition prepared in Reference example 1 by the procedure described in Example 1 and cut into sheets of a predetermined size. A total of six sheets were laminated in such a manner that all reinforcing fibers were aligned in the same direction, and then PPS films with an areal weight of 120 $g/m^2$ were attached to both surface to provide a preform. Following this, it was heated and pressed using a pressing machine in the same way as in Example 1 to produce a fiber-reinforced resin for compression strength evaluation and cross-sectional observation.

The prepreg [II] obtained above was cut into sheets of a predetermined size. Defining the axis direction of the reinforcing fiber as 0° and defining the direction perpendicular to the axis as 90°, layers were laminated in the structure of $[0°/90°]_{2s}$ (the symbol s denotes mirror symmetry) and PPS films with an areal weight of 120 $g/m^2$ were attached to both surface to provide a preform. Following this, it was heated and pressed using a pressing machine in the same way as in Example 1 to produce a fiber-reinforced resin for tensile shear joining strength evaluation and welded in the same way as in Example 1 to provide an integrated product.

Table 5 shows results of evaluation for physical properties etc. of the fiber-reinforced resin and integrated product along with the evaluation results obtained in Example 1.

[Table 5]

[Table 5]

| | | Example 1 | Example 13 |
|---|---|---|---|
| epoxy resin composition | | Reference example 1 | |
| thermoplastic resin | | PPS | |
| reinforcing fiber | | carbon fiber 1 | |
| fiber-reinforced resin | reinforcing fiber being across interface between two resin regions and in contact with them | present | absent |
| | roughness average length RSm at interface (μm) | 46 | 181 |
| | roughness average height Rc at interface (μm) | 24 | 2 |
| integrated product | welding temperature (°C) | 300 | |
| | holding time (min) | 2 | |
| | tensile shear joining strength (MPa) | B | C |
| | | 27.1 | 21.2 |
| | coefficient of variation (CV) in tensile shear joining strength (%) | 4.7 | 4.8 |

[Examples 14 to 18: Influence of surface free energy of reinforcing fiber]

Except for using the epoxy resin composition prepared in Reference example 1 and using the carbon fiber species specified in Table 6 to form reinforcing fiber sheets, the same procedure as in Example 1 was carried out to produce fiber-reinforced resins and integrated products.

Table 6 shows results of evaluation for physical properties etc. of the fiber-reinforced resin and integrated product along with the evaluation results obtained in Example 1.

[Table 6]

[Table 6]

| | | Example 1 | Example 14 | Example 15 | Example 16 | Example 17 | Example 18 |
|---|---|---|---|---|---|---|---|
| epoxy resin composition | | Reference example 1 | | | | | |
| thermoplastic resin | | PPS | | | | | |
| reinforcing fiber | | carbon fiber 1 | | | | | |
| | sizing agent compound | sizing 1 | sizing 2 | sizing 3 | sizing 4 | sizing 5 | sizing 6 |
| | surface free energy ($mJ/m^2$) | 20 | 9 | 32 | 18 | 32 | 33 |
| fiber-reinforced resin | 1) compression strength (under nontreatment conditions) (GPa) | 1.62 | 1.61 | 1.63 | 1.61 | 1.62 | 1.62 |
| | 120°C | 9.1 | 9.1 | | 9.1 | 9.1 | 9.1 |
| | 2) compression strength after heating at 300°C (GPa) | A<br>1.58 | A<br>1.57 | A<br>1.59 | A<br>1.57 | A<br>1.58 | A<br>1.58 |
| | compression strength after heating at 300°C / compression strength (nontreatment) (%) | 98 | 98 | 98 | 98 | 98 | 98 |
| | 3) compression strength at 120°C after water absorption (GPa) | A<br>1.22 | A<br>1.21 | A<br>1.23 | A<br>1.21 | A<br>1.22 | A<br>1.22 |
| integrated product | tensile shear joining strength (MPa) | B<br>27.1 | C<br>23.5 | A<br>31.2 | B<br>25.8 | A<br>29.8 | A<br>30.5 |
| | coefficient of variation (CV) in tensile shear joining strength (%) | 4.7 | 9.3 | 4.5 | 7.2 | 5.1 | 5.4 |

EXPLANATION OF NUMERALS

1: reinforcing fiber
2: thermoplastic resin region
3: cured epoxy resin region
4: observed Image
5: interface
6: reference line
7: perpendicular guideline
8: cross-sectional profile curve

## Claims

1. A fiber-reinforced resin comprising a reinforcing fiber and having a cured epoxy resin region and a thermoplastic resin region disposed at the surface wherein aromatic rings account for 50% or more and 90% or less of all molecules that constitute the cured epoxy resin present in the cured epoxy resin region.

2. A fiber-reinforced resin as set forth in claim 1, wherein the cured epoxy resin region and the thermoplastic resin region form separate layers that are adjacent to each other.

3. A fiber-reinforced resin as set forth in either claim 1 or 2, wherein the reinforcing fiber has a heat conductivity of 3 W/(m·K) or more and 100 W/(m·K) or less.

4. A fiber-reinforced resin as set forth in claim 3, wherein the reinforcing fiber has a heat conductivity of 3 W/(m·K) or more and 50 W/(m·K) or less.

5. A fiber-reinforced resin as set forth in any one of claims 1 to 4, wherein the reinforcing fiber has a surface free energy of 10 $mJ/m^2$ or more and 50 $mJ/m^2$ or less as measured by the Wilhelmy method.

6. A fiber-reinforced resin as set forth in any one of claims 1 to 5, wherein the cured epoxy resin is a cured product of an epoxy resin composition that contains an epoxy resin having a polycyclic aromatic hydrocarbon skeleton or a biphenyl skeleton.

7. A fiber-reinforced resin as set forth in any one of claims 1 to 6, wherein the cured epoxy resin is a cured product of an epoxy resin composition in which the average epoxy equivalent weight over all epoxy resins is 160 g/eq or more and 255 g/eq or less.

8. A fiber-reinforced resin as set forth in any one of claims 1 to 7, wherein the cured epoxy resin is a cured product of an epoxy resin composition that contains polyamine compounds having an average active hydrogen equivalent weight of 55 g/eq or more and 100 g/eq or less.

9. A fiber-reinforced resin as set forth in any one of claims 1 to 8, wherein the cured epoxy resin is a cured product of an epoxy resin composition that forms, when heated at 180°C for 120 minutes, a cured product showing a rate of mass loss on heating of 1.0% or less when maintained at 300°C for 2 minutes and having a glass transition temperature of 180°C or more and 350°C or less.

10. A fiber-reinforced resin as set forth in any one of claims 1 to 9, wherein there exist reinforcing fibers that are across the interface between the cured epoxy resin region and the thermoplastic resin region and are in contact with both resin regions.

11. Afiber-reinforced resin as set forth in any one of claims 1 to 10, wherein the interface between the cured epoxy resin region and the thermoplastic resin region has a roughness average length RSm of 100 μm or less and a roughness average height Rc of 3.5 μm or more.

12. An integrated product produced by welding a fiber-reinforced resin as set forth in any one of claims 1 to 11 to another member via the thermoplastic resin region.

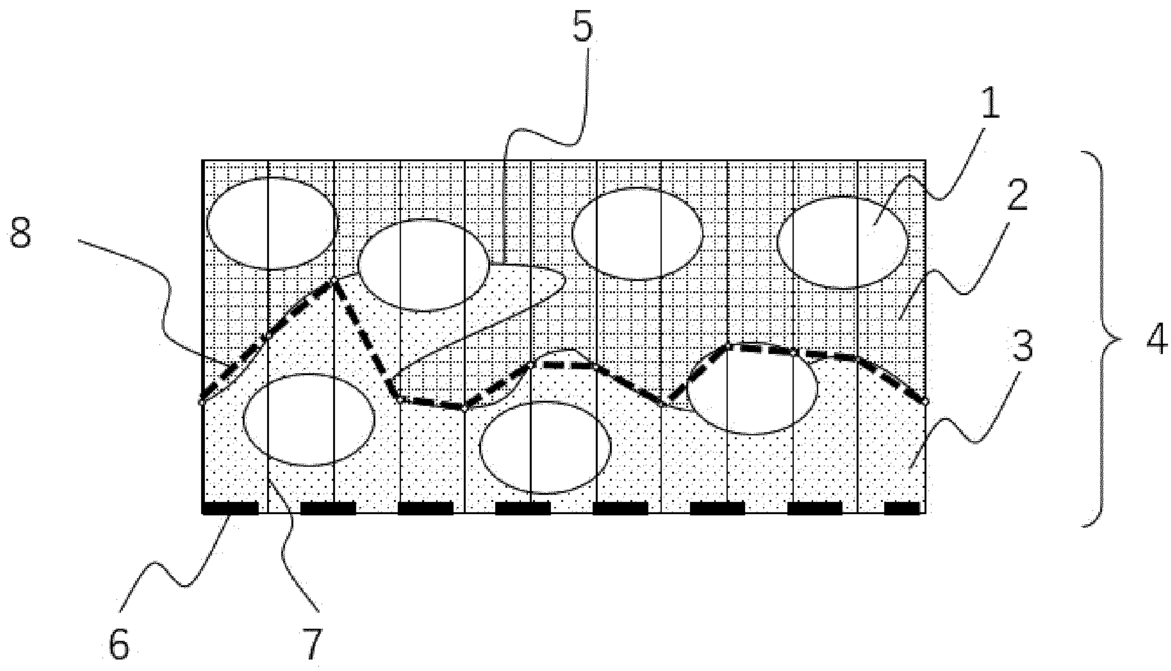


[Fig. 1]

**INTERNATIONAL SEARCH REPORT**

International application No. **PCT/JP2021/039650**

**A. CLASSIFICATION OF SUBJECT MATTER**

***C08J 5/04***(2006.01)i; ***B32B 27/04***(2006.01)i; ***B32B 27/38***(2006.01)i
FI: C08J5/04 CFC; B32B27/38; B32B27/04 Z

According to International Patent Classification (IPC) or to both national classification and IPC

**B. FIELDS SEARCHED**

Minimum documentation searched (classification system followed by classification symbols)

B29B11/16,15/08-15/14; C08J5/04-5/10,5/24; B32B; B29C70/00-70/88

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2013-531707 A (HEXCEL COMPOSITES, LTD.) 08 August 2013 (2013-08-08) claims, paragraphs [0008], [0024]-[0028], [0049], [0059]-[0066], examples, tables 1-3 | 1-12 |
| Y | WO 2008/038591 A1 (TORAY INDUSTRIES, INC) 03 April 2008 (2008-04-03) claims, paragraphs [0035], [0036], [0073], [0074], [0109]-[0112], [0121], [0131], [0140]-[0143], examples | 1-12 |
| Y | WO 2016/204173 A1 (TORAY INDUSTRIES, INC) 22 December 2016 (2016-12-22) claims, paragraphs [0011], [0021], [0031]-[0035], [0052], examples | 1-12 |
| Y | JP 2007-154160 A (TORAY INDUSTRIES, INC) 21 June 2007 (2007-06-21) claims, paragraphs [0001], [0013], [0021]-[0024], examples | 1-12 |
| A | WO 2018/066600 A1 (MITSUBISHI CHEM CORP) 12 April 2018 (2018-04-12) entire text | 1-12 |
| A | WO 2004/060658 A1 (TORAY INDUSTRIES, INC) 22 July 2004 (2004-07-22) entire text | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 December 2021** | **11 January 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

## INTERNATIONAL SEARCH REPORT

International application No.
**PCT/JP2021/039650**

**C. DOCUMENTS CONSIDERED TO BE RELEVANT**

| Category* | Citation of document, with indication, where appropriate, of the relevant passages | Relevant to claim No. |
|---|---|---|
| A | JP 1-104625 A (TORAY INDUSTRIES, INC) 21 April 1989 (1989-04-21) entire text | 1-12 |
| A | JP 2002-212320 A (TORAY INDUSTRIES, INC) 31 July 2002 (2002-07-31) entire text | 1-12 |
| A | JP 2014-32979 A (SUMITOMO BAKELITE CO LTD) 20 February 2014 (2014-02-20) entire text | 1-12 |
| A | JP 2014-218600 A (SUMITOMO BAKELITE CO LTD) 20 November 2014 (2014-11-20) entire text | 1-12 |
| P, A | WO 2020/235485 A1 (TORAY INDUSTRIES, INC) 26 November 2020 (2020-11-26) entire text | 1-12 |

Form PCT/ISA/210 (second sheet) (January 2015)

**INTERNATIONAL SEARCH REPORT**
**Information on patent family members**

International application No.
**PCT/JP2021/039650**

| Patent document cited in search report | Publication date (day/month/year) | Patent family member(s) | Publication date (day/month/year) |
|---|---|---|---|
| JP 2013-531707 A | 08 August 2013 | US 2011/0294387 A1<br>claims, paragraphs [0040]-[0044], [0075]-[0082], examples, fig. 1-3<br>WO 2011/148237 A1<br>EP 2576671 A1<br>AU 2011256922 A<br>CA 2798826 A<br>CN 103025804 A | |
| WO 2008/038591 A1 | 03 April 2008 | US 2010/0092770 A1<br>claims, paragraphs [0039], [0040], [0108], [0109], [0144]-[0147], [0156], [0175], [0184]-[0187], examples<br>EP 2067592 A1<br>KR 10-2009-0073081 A<br>CN 101516589 A<br>TW 200829408 A | |
| WO 2016/204173 A1 | 22 December 2016 | US 2018/0134837 A1<br>claims, paragraphs [0016], [0027]-[0031], [0048], examples<br>EP 3312210 A1<br>CN 107531879 A<br>KR 10-2018-0019522 A | |
| JP 2007-154160 A | 21 June 2007 | (Family: none) | |
| WO 2018/066600 A1 | 12 April 2018 | US 2019/0225764 A1<br>CN 109790311 A | |
| WO 2004/060658 A1 | 22 July 2004 | US 2006/0110599 A1<br>EP 1593491 A1<br>KR 10-2005-0084499 A<br>CN 1732083 A | |
| JP 1-104625 A | 21 April 1989 | US 5028478 A<br>EP 274899 A2 | |
| JP 2002-212320 A | 31 July 2002 | (Family: none) | |
| JP 2014-32979 A | 20 February 2014 | KR 10-2014-0017442 A<br>TW 201418339 A | |
| JP 2014-218600 A | 20 November 2014 | (Family: none) | |
| WO 2020/235485 A1 | 26 November 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004060658 A
- JP 2010255168 A